# FASCICULE DE BREVET EUROPEEN

(11) **EP 2 349 844 B1**
(45) Date de publication et mention de la délivrance du brevet: **31.10.2012**
(21) Numéro de dépôt: 09795486.1
(22) Date de dépôt: 23.11.2009
(51) Int. Cl.: A01G 7/04, A01G 9/00, A01G 15/00, B64G 1/10, B64G 1/42, B64G 1/44, B64G 1/66, F21S 11/00, G02B 17/06, G02B 27/00

(54) **SYSTEME SPATIAL DE RENFORCEMENT DE LA PHOTOSYNTHESE ET PROCEDE**
WELTRAUMBASIERTES SYSTEM ZUR VERSTÄRKUNG VON PHOTOSYNTHESE UND VERFAHREN
SYSTEM IN SPACE FOR REINFORCING PHOTOSYNTHESIS AND METHOD

(30) Priorité: 25.11.2008 FR 0806609
(43) Date de publication de la demande: 03.08.2011
(73) Titulaire: ASTRIUM SAS, 92150 Suresnes (FR)
(72) Inventeur: LAINÉ, Robert, F-17138 St Xandre (FR); PARROT, Pierre, F-75014 Paris (FR)
(74) Mandataire: Hauer, Bernard
(86) Numéro de dépôt international: PCT/FR2009/052248
(87) Numéro de publication internationale: WO 2010/061105

(56) Documents cités:
- US-A- 4 305 555
- US-A- 4 371 135
- US-A- 5 019 768
- US-A- 5 114 101
- US-A- 5 238 210
- US-A- 5 984 239
- US-B1- 7 077 361

## Description

La présente invention concerne un satellite de retransmission de la lumière solaire, ainsi que des applications utilisant un ou plusieurs satellites de ce type. Le document US 4305 555, qui est considéré l'état de la technique plus proche montre un tel satellite.

Bien que non exclusivement, la présente invention s'applique plus particulièrement à l'illumination à l'aide de la lumière solaire, en particulier la nuit, d'une zone géographique du globe terrestre qui présente une grande surface, par exemple plusieurs dizaines de kilomètres carrés.

On sait qu'un simple réflecteur de la lumière solaire, monté sur un satellite, n'est pas en mesure d'illuminer une zone d'une telle étendue de la Terre, à moins d'utiliser un réflecteur présentant une très grande surface, ce qui suppose alors une masse et une inertie très importantes avec tous les problèmes (de réalisation, de coût, de mise en place,...) qui en découlent. A titre d'illustration, si on comptait illuminer une surface d'environ une centaine de kilomètres carrés sur la Terre, il faudrait sans doute prévoir un réflecteur dont la surface serait de l'ordre de plusieurs milliers de mètres carrés si on voulait disposer d'une puissance totale de plusieurs mégawatts. Or, un réflecteur (miroir) présentant une telle surface serait non seulement difficile à réaliser et à placer en orbite, mais présenterait une inertie telle qu'un éventuel repointage nécessiterait un système propulsif puissant et prendrait beaucoup de temps. Ainsi; il serait difficile de réaliser régulièrement des repointages, de sorte qu'il ne serait guère envisageable de modifier fréquemment la zone à illuminer.

Par ailleurs, par le document US-5019768, on connaît un système de transmission de micro-ondes de la Lune vers la Terre, qui utilise un réflecteur à micro-ondes qui est placé en orbite autour de la Terre et qui renvoie vers la Terre un rayonnement reçu de la Lune. Un tel satellite réflecteur n'est pas en mesure d'illuminer une surface importante de la Terre.

La présente invention a pour objet de remédier aux inconvénients précités. Elle concerne un satellite de retransmission de la lumière solaire, qui permet de retransmettre vers un corps céleste de la lumière solaire, en particulier dans le but d'illuminer une zone de grande surface de ce corps céleste, notamment de la Terre, cette zone pouvant être facilement modifiée.

A cet effet, selon l'invention, ledit satellite de retransmission de la lumière solaire, est remarquable en ce qu'il comporte au moins un jeu d'éléments embarqués suivants :
- un premier ensemble optique qui est destiné à collecter de la lumière solaire, et dont la position est fixe par rapport à la structure du satellite ;
- un second ensemble optique qui présente une taille et une inertie plus faibles que celles dudit premier ensemble optique, qui est destiné à rediffuser la lumière collectée par ledit premier ensemble optique avec une densité du flux rediffusé plus élevée que la densité du flux collecté, et dont l'orientation est susceptible d'être modifiée par rapport à la structure du satellite de retransmission de manière à modifier la direction de l'axe selon lequel est rediffusé la lumière ;
- des moyens commandables à distance, qui sont susceptibles de régler l'orientation dudit second ensemble optique ; et
- des moyens de transmission de lumière qui sont formés de manière à transmettre dudit premier ensemble optique audit second ensemble optique, quelle que soit l'orientation de ce dernier, toute lumière collectée par ledit premier ensemble optique.

Ainsi, grâce à la séparation de la fonction de collecte de la lumière (mise en oeuvre par ledit premier ensemble optique) et de la fonction de rediffusion de la lumière (mise en oeuvre par ledit second ensemble optique), et grâce à une concentration de la lumière (précisée ci-dessous), on est en mesure de réaliser différemment ces deux ensembles optiques, et ceci selon des caractéristiques optimales pour le but à atteindre, à savoir retransmettre la lumière sur des zones de grandes surfaces et pouvoir facilement modifier ces zones, comme précisé ci-dessous.

En effet :
- comme, grâce à l'invention, le premier ensemble optique est uniquement destiné à collecter la lumière solaire, il doit simplement être dirigé vers le soleil et n'a pas être réorienté, de légères corrections peu fréquentes de la position et l'orientation du satellite étant suffisantes. Aussi, ce premier ensemble optique peut être réalisé avec une inertie et une taille très importantes de manière à pouvoir collecter une grande quantité de lumière solaire ; et
- comme, grâce à l'invention, la seule fonction du second ensemble optique est de rediffuser la lumière solaire collectée (et concentrée), il peut être réalisé selon une taille et une inertie beaucoup plus faibles que celles dudit premier ensemble optique. Ceci permet de modifier plus facilement son orientation par rapport au corps du satellite et de prévoir des moyens susceptibles de régler, facilement et à coût réduit, l'orientation de la lumière solaire rediffusée. Ainsi, il est possible de changer, facilement et rapidement, la zone à illuminer.

On notera que le satellite de retransmission conforme à l'invention ne correspond pas un simple satellite relais à deux ensembles optiques. En effet, un simple satellite relais (qui ne fait que renvoyer telle quelle la lumière reçue) nécessiterait des ensembles optiques de même taille, alors que, grâce à la présente invention, la lumière solaire collectée est concentrée avant d'être rediffusée, ce qui permet de prévoir les caractéristiques avantageuses précitées.

Dans un mode de réalisation particulier, ledit satellite de retransmission comporte des moyens de filtrage pour filtrer la lumière collectée de sorte que le second ensemble optique rediffuse la lumière uniquement dans au moins une bande de fréquences prédéterminée. De préférence, lesdits moyens de filtrage sont réalisés à partir de traitements de surface et de l'utilisation de matériaux appropriés pour au moins l'un des éléments suivants du satellite de retransmission : le second ensemble optique et les moyens de transmission de lumière.

En outre, dans un mode de réalisation particulier, lesdits moyens de transmission de lumière comportent l'un des moyens suivants :
- un périscope ;
- un jeu de guides optiques ; et
- au moins une fibre optique .

La présente invention concerne également un procédé d'illumination d'une zone particulière d'un corps céleste, en particulier de la Terre.

Selon l'invention, ce procédé est remarquable en ce que :
- on place au moins un satellite de retransmission de la lumière solaire, tel que celui précité, en orbite autour du corps céleste ;
- on oriente ce satellite de retransmission de sorte que ledit premier ensemble optique dudit satellite de retransmission reste toujours dirigé vers le soleil, au moins lors du passage du satellite de retransmission au-dessus d'une région donnée dudit corps céleste, de manière à pouvoir collecter de la lumière solaire lors de ce passage ; et
- on règle, à distance, l'orientation dudit second ensemble optique du satellite de retransmission pour qu'il rediffuse la lumière solaire collectée sur une zone à illuminer du corps céleste lors du passage du satellite de retransmission au-dessus de ladite région.

La présente invention concerne également un système spatial de renforcement de la photosynthèse sur la Terre.

Selon l'invention, ledit système spatial comporte :
- au moins un satellite de retransmission de la lumière solaire, tel que celui précité, qui est placé en orbite autour de la Terre, en étant orienté de sorte que ledit premier ensemble optique dudit satellite de retransmission reste toujours dirigé vers le soleil, au moins lors de son passage au-dessus d'une région donnée de la Terre, de manière à pouvoir collecter de la lumière solaire lors de ce passage ; et
- un centre de commande dudit satellite de retransmission qui est, de préférence, prévue sur la Terre. Ce centre de commande comporte, notamment, des moyens de commande qui sont en mesure de régler, à distance, l'orientation dudit second ensemble optique du satellite de retransmission et qui sont formés de manière à régler cette orientation de sorte que le satellite de retransmission rediffuse la lumière solaire collectée sur une zone donnée de la Terre, lors de son passage au-dessus de cette région, dans le but de renforcer la photosynthèse sur cette zone.

On sait qu'actuellement, l'activité de photosynthèse sur la terre et dans la mer est principalement dictée par le cycle journalier jour/nuit et le cycle annuel hiver/été. Dans certaines régions du globe terrestre, des serres sont utilisées pour allonger les périodes de croissance des plantes. Ces serres sont chauffées et éclairées par des moyens usuels, qui sont le plus souvent consommateurs d'énergie fossile. Quelques serres sont chauffées par l'énergie provenant de tours de refroidissement de centrales nucléaires et éclairées avec l'électricité de ces centrales. Dans tous les cas, ces serres consomment de l'énergie produite dans des centrales électriques et sont pratiquement réservés à des populations ayant accès aux moyens nécessaires à la construction de ces serres et à leur alimentation énergétique.

Grâce au système précité conforme à l'invention, on est en mesure de renforcer la photosynthèse sur toute zone de la Terre, en utilisant à cet effet une énergie gratuite et librement disponible, à savoir l'énergie solaire.

Dans un mode de réalisation préféré, lesdits moyens de filtrage du satellite de retransmission sont formés de manière à filtrer la lumière collectée afin de rediffuser la lumière dans des bandes de fréquences définies respectivement autour de 450 nm et 660 nm, qui correspondent aux fréquences lumineuses utilisées par la photosynthèse. Ainsi, seule la partie du spectre solaire utile pour la photosynthèse des plantes et des algues est retransmise sur la Terre. Ceci permet de favoriser la croissance des plantes et des algues, sans pour autant augmenter proportionnellement les doses de rayonnement ultraviolet et infrarouge reçues au sol.

En outre, de façon avantageuse, lesdits moyens de commande du centre de commande comportent :
- une unité de calcul pour déterminer des ordres de commande destinés aux moyens de réglage de l'orientation dudit second ensemble optique du satellite de retransmission ; et
- des moyens d'émission de données qui sont formés de manière à transmettre lesdits ordres de commande auxdits moyens de réglage, via des moyens de réception de données coopérants qui sont montés sur le satellite de retransmission.

Par ailleurs, de façon avantageuse, ledit système comporte également un centre de service qui transmet audit centre de contrôle des demandes de clients, relatives au renforcement de la photosynthèse sur au moins une zone particulière de la Terre. Ces clients peuvent être, par exemple, des sociétés ou des coopératives agricoles qui veulent faire croître leurs cultures, en renforçant la photosynthèse, notamment la nuit, sur leurs terrains cultivés.

Les figures du dessin annexé feront bien comprendre comment l'invention peut être réalisée. Sur ces figures, des références identiques désignent des éléments semblables.

La figure 1 montre schématiquement un système conforme à l'invention d'illumination d'une zone d'un corps céleste, notamment de la Terre, en particulier pour y renforcer la photosynthèse.

La figure 2 montre schématiquement un satellite de retransmission de la lumière solaire, conforme à l'invention et faisant partie d'un tel système.

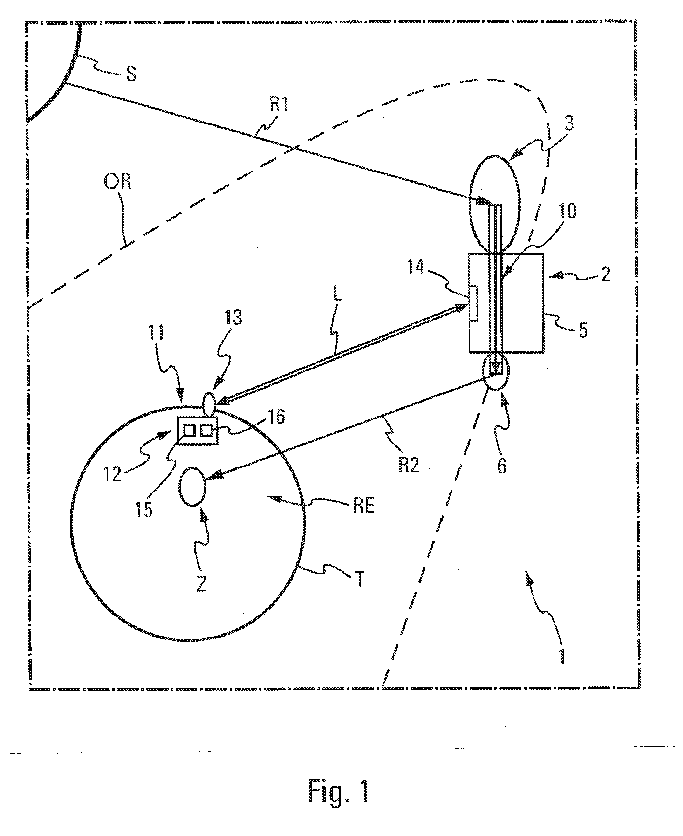

Le système 1 conforme à l'invention et représenté schématiquement sur la figure 1 est un système spatial qui est destiné à illuminer en lumière solaire une zone Z d'un corps céleste T, notamment de la Terre.

Pour ce faire, ledit système 1 comporte au moins un satellite 2 de retransmission de la lumière solaire, qui est placé en orbite autour de ce corps céleste T.

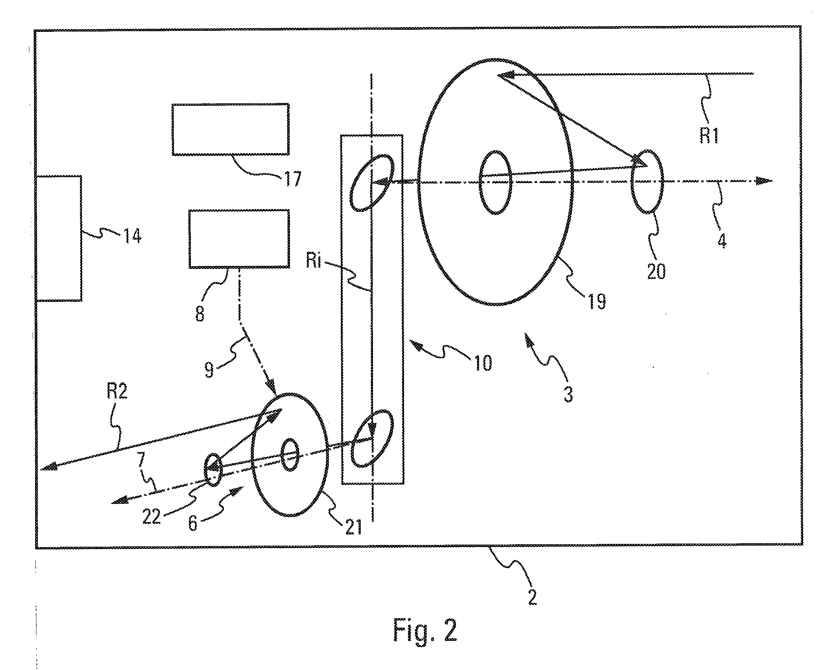

Selon l'invention, ce satellite 2 comporte, comme représenté notamment sur la figure 2 :
- un ensemble optique 3 qui est orienté suivant un axe 4 (de collecte) qui est toujours dirigé vers le soleil S lors du passage du satellite 2 au-dessus d'une région RE donnée du corps céleste T, afin de pouvoir collecter directement de la lumière solaire sous forme d'un rayonnement solaire R1. La position dudit ensemble optique 3 qui présente une taille et une inertie élevées est fixe par rapport à la structure (ou corps) 5 du satellite 2 ;
- un ensemble optique 6 qui présente une taille et une inertie beaucoup plus faibles que celles dudit ensemble optique 3. Cet ensemble optique 6 est orienté suivant un axe 7 qui est dirigé vers le corps céleste T afin de rediffuser, sous forme d'un rayonnement R2, la lumière collectée par ledit ensemble optique 3, lors du passage au-dessus de la région RE (qui correspond par exemple à une partie d'un pays). Cette lumière est rediffusée avec une densité de flux qui est beaucoup plus élevée que la densité de flux du rayonnement R1 collecté, en raison d'une concentration de la lumière réalisée sur le satellite 2, comme précisé ci-dessous. En outre, l'orientation de l'ensemble optique 6 est susceptible d'être modifiée par rapport à la structure 5 du satellite 2 de manière à modifier la direction (de pointage) de l'axe 7 selon lequel est rediffusé la lumière ;
- des moyens 8 qui sont commandables à distance, comme précisé ci-dessous, et qui sont susceptibles de régler (c'est-à-dire de modifier) l'orientation (d'axe 7) dudit ensemble optique 6, comme illustré par une liaison 9 en traits mixtes ; et
- des moyens 10 de transmission de lumière qui sont formés de manière à transmettre de l'ensemble optique 3 à l'ensemble optique 6, quelle que soit l'orientation de ce dernier, toute lumière collectée par l'ensemble optique 3 en vue de sa rediffusion par l'ensemble optique 6, comme illustré par un rayonnement Ri.

En plus dudit satellite de retransmission 2, ledit système 1 comporte également un centre de commande 11 de ce satellite de retransmission 2, qui est, de préférence, prévu sur la Terre T. Ce centre de commande 11 comporte, notamment, des moyens de commande 12 qui sont en mesure de régler, à distance, l'orientation dudit ensemble optique 6 du satellite de retransmission 2 et qui sont formés de manière à régler cette orientation de sorte que le satellite de retransmission 2 rediffuse la lumière solaire (suivant l'axe de rediffusion 7) sur une zone Z donnée de la Terre T, lors de son passage au-dessus de la région RE, en particulier dans le but de renforcer la photosynthèse sur cette zone Z (qui est par exemple une zone cultivée située dans ladite région RE).

Ainsi, grâce, d'une part, à la séparation de la fonction de collecte de la lumière (mise en oeuvre par ledit ensemble optique 3) et de la fonction de rediffusion de la lumière (mise en oeuvre par ledit ensemble optique 6), et d'autre part, à la concentration de la lumière, les deux ensembles optiques 3 et 6 peuvent être réalisés différemment, et ceci selon des caractéristiques optimales pour le but à atteindre, à savoir retransmettre la lumière solaire sur au moins une zone Z de grande surface, qui peut de plus être facilement modifiée.

En effet :
- comme l'ensemble optique 3 est uniquement destiné à collecter la lumière solaire, il doit simplement être dirigé vers le soleil S (lors du passage au-dessus de la région RE) et n'a pas à être réorienté, de légères corrections peu fréquentes de la position et de l'orientation du satellite 2 pouvant toutefois être nécessaires. Aussi, il peut être réalisé avec une inertie et une taille très importantes de sorte qu'il est en mesure de collecter une grande quantité de lumière solaire ; et
- ledit ensemble optique 6, dont la seule fonction est de rediffuser la lumière solaire collectée (et concentrée), peut être réalisé selon une taille et une inertie beaucoup plus faibles que celles dudit ensemble optique 3. Ceci permet de modifier plus facilement son orientation par rapport au corps 5 du satellite 2 et de prévoir des moyens 8 susceptibles de régler, facilement et à coût réduit, l'orientation dudit ensemble optique 6. -Ainsi, il est possible de changer, facilement et rapidement, l'orientation de l'axe 7 et donc la localisation sur le corps céleste T de la zone Z qui est illuminée lors du passage du satellite 2 au-dessus de la région RE.

On notera que le satellite de retransmission 2 conforme à l'invention ne correspond pas un simple satellite relais à deux ensembles optiques. En effet, un simple satellite relais (qui ne fait que renvoyer, telle quelle, la lumière reçue) nécessiterait des ensembles optiques de même taille, alors que, grâce à la présente invention, la lumière solaire collectée est concentrée avant d'être rediffusée, ce qui permet de prévoir les caractéristiques avantageuses précitées.

Par ailleurs, dans un mode de réalisation particulier, le satellite de retransmission 2 comporte une pluralité d'ensembles optiques 3 et/ou une pluralité d'ensembles optiques 6.

Lesdits moyens de commande 12 du centre de commande 11 comportent :
- une unité de calcul 15 pour déterminer des ordres de commande destinés auxdits moyens 8 de réglage de l'orientation dudit ensemble optique 6 du satellite de retransmission 2 ; et
- des moyens 13 d'émission de données qui sont formés de manière à transmettre ces ordres de commande à des moyens 14 de réception de données coopérants (qui sont montés sur le satellite de retransmission 2), par l'intermédiaire d'une liaison L à ondes électromagnétiques, par exemple de type TM-TC. Les moyens 14 transmettent ensuite ces ordres de commande auxdits moyens de réglage 8.

Ledit centre de contrôle 11 comporte également des moyens 16 usuels de contrôle d'un satellite, qui coopèrent notamment avec des moyens 17 du satellite 2. Ces moyens 17 peuvent comporter, en particulier, un ensemble d'éléments et de fonctionnalités usuels de tout satellite, qui sont notamment destinés à :
- piloter l'altitude et corriger l'orbite OR du satellite 2 ;
- fournir la puissance électrique nécessaire ; et
- assurer un environnement thermique raisonnable aux équipements embarqués.

Dans un mode de réalisation préféré :
- ledit ensemble optique 3 comporte un premier miroir 19 de très grande surface, qui est orienté vers le soleil S selon l'axe 4 et qui focalise (c'est-à-dire fait converger) la lumière collectée sur un deuxième miroir 20 qui est associé auxdits moyens de transmission de lumière 10 ; et
- ledit ensemble optique 6 comporte au moins un jeu similaire de moyens 21 et 22 pour rediffuser la lumière collectée, à savoir un premier miroir 21 (de surface plus petite que le miroir 19) qui est orienté vers le corps céleste T selon l'axe 7 et qui reçoit la lumière d'un deuxième miroir 22 qui est associé auxdits moyens de transmission de lumière 10 et la fait diverger.

Comme la divergence mise en oeuvre par l'ensemble 6 est moins importante que la convergence mise en oeuvre par l'ensemble 3, la lumière solaire est plus concentrée dans le rayonnement R2 rediffusé que dans le rayonnement R1 collecté, c'est-à-dire présente une densité de flux plus élevée.

La transmission de la lumière venant de l'ensemble optique 3 se fait à l'aide d'éléments usuels faisant partie desdits moyens 10. Ces moyens 10 comportent, de préférence, l'un des moyens suivants :
- un périscope ;
- un jeu de guides optiques ; et
- au moins un fibre optique .

Lesdits miroirs 21 et 22 peuvent être réalisés en plusieurs parties dans un matériau tel que le carbure de silicium, qui supporte les températures élevées résultant de la densité de flux élevée prévue.

Dans un mode de réalisation particulier, ledit satellite de retransmission 2 comporte également des moyens de filtrage pour filtrer la lumière collectée de sorte que l'ensemble optique 6 rediffuse la lumière uniquement dans au moins une bande de fréquences prédéterminée. De préférence, lesdits moyens de filtrage sont obtenus à partir de traitements de surface réalisés sur des miroirs utilisés, notamment de l'ensemble optique 6, et de l'utilisation de matériaux appropriés pour les moyens 10 de transmission de lumière.

Le système 1 conforme à l'invention est donc particulièrement bien approprié pour illuminer une zone Z particulière d'un corps céleste T quelconque, en particulier de la Terre, mais également de la Lune par exemple. Dans un mode de réalisation particulier, ledit système 1 comporte une pluralité de satellites de retransmission 2 tels que celui décrit ci-dessus, qui tournent autour du corps céleste T, sur une même orbite OR ou sur des orbites différentes.

Dans un mode de réalisation préféré, mais non exclusif, ledit système 1 est destiné à illuminer une zone Z de la Terre T afin d'y renforcer la photosynthèse.

Dans ce mode de réalisation préféré, les moyens de commande 12 sont destinés à régler, à distance, l'orientation dudit ensemble optique 6 du satellite de retransmission 2 de sorte que ledit satellite de retransmission 2 rediffuse la lumière solaire collectée sur une zone Z donnée de la Terre T, lors de son passage au-dessus d'une région RE particulière, dans le but de renforcer la photosynthèse sur cette zone Z.

Le système 1 conforme à ce mode de réalisation préféré est donc en mesure d'engendrer une illumination complémentaire et ainsi de renforcer la photosynthèse sur toute zone Z de la Terre T, en utilisant à cet effet une énergie gratuite et librement disponible, à savoir l'énergie solaire.

Dans ce mode de réalisation préféré, lesdits moyens de filtrage du satellite de retransmission 2 sont formés de manière à rediffuser la lumière dans des bandes de fréquences définies respectivement autour de 450 nm et 660 nm, qui correspondent aux fréquences lumineuses utilisées par la photosynthèse. Ainsi, seule la partie du spectre solaire utile pour la photosynthèse des plantes et/ou des algues est retransmise sur la Terre T. Ceci permet de favoriser la croissance des plantes et/ou des algues, sans pour autant augmenter proportionnellement les doses de rayonnement ultraviolet et infrarouge reçues au sol.

Par ailleurs, ledit système 1 comporte également un centre de service (non représenté) qui transmet audit centre de contrôle 11 des demandes de clients, relatives au renforcement de la photosynthèse sur des zones particulières de la Terre T. Ces clients peuvent être, par exemple, des sociétés ou des coopératives agricoles qui veulent faire croître leurs cultures, en renforçant la photosynthèse (notamment la nuit) sur leurs terrains cultivés. Dans ce mode de réalisation préféré, le système 1 permet donc d'engendrer un développement supplémentaire d'activités agricoles ou aquacoles.

Ledit centre de service détermine le plan d'opération du ou des satellites 2 et assure le suivi du service et la facturation correspondante. Ce centre de service peut être localisé audit centre de contrôle 11.

## Revendications

1. Procédé de renforcement de la photosynthèse sur la Terre (T), procédé selon lequel :
- on place en orbite autour de la Terre (T) au moins un satellite de retransmission (2) de la lumière solaire, qui comprend au moins un jeu d'éléments embarqués suivants :
. un premier ensemble optique (3) qui est destiné à collecter de la lumière solaire, et dont la position est fixe par rapport à la structure (5) dudit satellite de retransmission (2) ;
. un second ensemble optique (6) qui présente une taille et une inertie plus faibles que celles dudit premier ensemble optique (3), qui est destiné à rediffuser la lumière collectée par ledit premier ensemble optique (3) avec une densité du flux rediffusé plus élevée que la densité du flux collecté, et dont l'orientation est susceptible d'être modifiée par rapport à la structure (5) du satellite de retransmission (2) de manière à modifier la direction de l'axe (7) selon lequel est rediffusé la lumière ;
. des moyens (8) commandables à distance, qui sont susceptibles de régler l'orientation dudit second ensemble optique (6) ;
. des moyens de transmission de lumière (10) qui sont formés de manière à transmettre dudit premier ensemble optique (3) audit second ensemble optique (6), quelle que soit l'orientation de ce dernier, toute lumière collectée par ledit premier ensemble optique (3) ; et
. des moyens de filtrage pour filtrer la lumière collectée de sorte que le second ensemble optique (6) rediffuse la lumière uniquement dans des bandes de fréquences définies respectivement autour de 450 nm et 660 nm ;
- on oriente ce satellite de retransmission (2) de sorte que ledit premier" ensemble optique (3) dudit satellite de retransmission (2) reste toujours dirigé vers le soleil (S), au moins lors du passage du satellite de retransmission (2) au-dessus d'une région (RE) donnée dudit corps céleste (T), de manière à pouvoir collecter de la lumière solaire lors de ce passage ; et
- on règle, à distance, l'orientation dudit second ensemble optique (6) du satellite de retransmission (2) pour qu'il rediffuse la lumière solaire collectée sur une zone (Z) donnée de la Terre (T), lors de son passage au-dessus de cette région (RE), dans le but de renforcer la photosynthèse sur cette zone (Z) de la Terre (T).

2. Système spatial de renforcement de la photosynthèse sur la Terre (T), ledit système (1) comportant :
- au moins un satellite de retransmission (2) de la lumière solaire, qui comprend au moins un jeu d'éléments embarqués suivants :
. un premier ensemble optique (3) qui est destiné à collecter de la lumière solaire, et dont la position est fixe par rapport à la structure (5) dudit satellite de retransmission (2) ;
. un second ensemble optique (6) qui présente une taille et une inertie plus faibles que celles dudit premier ensemble optique (3), qui est destiné à rediffuser la lumière collectée par ledit premier ensemble optique (3) avec une densité du flux rediffusé plus élevée que la densité du flux collecté, et dont l'orientation est susceptible d'être modifiée par rapport à la structure (5) du satellite de retransmission (2) de manière à modifier la direction de l'axe (7) selon lequel est rediffusé la lumière ;
. des moyens (8) commandables à distance, qui sont susceptibles de régler l'orientation dudit second ensemble optique (6) ;
. des moyens de transmission de lumière (10) qui sont formés de manière à transmettre dudit premier ensemble optique (3) audit second ensemble optique (6), quelle que soit l'orientation de ce dernier, toute lumière collectée par ledit premier ensemble optique (3) ; et
. des moyens de filtrage pour filtrer la lumière collectée de sorte que le second ensemble optique (6) rediffuse la lumière uniquement dans des bandes de fréquences définies respectivement autour de 450 nm et 660 nm,
ledit satellite de retransmission (2) étant placé en orbite autour de la Terre (T), en étant orienté de sorte que ledit premier ensemble optique (3) reste toujours dirigé vers le soleil (S), au moins lors de son passage au-dessus d'une région (RE) donnée de la Terre (T), de manière à pouvoir collecter de la lumière solaire lors de ce passage ; et
- un centre de commande (11) dudit satellite de retransmission (2), comportant des moyens de commande (12) qui sont en mesure de régler, à distance, l'orientation dudit second ensemble optique (6) du satellite de retransmission (2) et qui sont formés de manière à régler cette orientation de sorte que le satellite de retransmission (2) rediffuse la lumière solaire collectée sur une zone (Z) donnée de la Terre (T), lors de son passage au-dessus de cette région, dans le but de renforcer la photosynthèse sur cette zone (Z) de la Terre (T).

3. Système selon la revendication 2,
**caractérisé en ce que** lesdits moyens de filtrage du satellite de retransmission (2) sont réalisés à partir de traitements de surface et de l'utilisation de matériaux appropriés pour au moins l'un des éléments suivants : le second ensemble optique (6) et les moyens de transmission de lumière (101).

4. Système selon l'une des revendications 2 et 3,
**caractérisé en ce que** lesdits moyens de transmission de lumière (10) du satellite de retransmission (2) comportent l'un des moyens suivants :
- un périscope ;
- un jeu de guides optiques ; et
- au moins une fibre optique .

5. Système selon l'une des revendications 2 à 4,
**caractérisé en ce que** lesdits moyens de commande (12) du centre de commande (11) comportent :
- une unité de calcul (15) pour déterminer des ordres de commande destinés auxdits moyens (8) de réglage de l'orientation dudit second ensemble optique (6) du satellite de retransmission (2) ; et
- des moyens (13) d'émission de données qui sont formés de manière à transmettre lesdits ordres de commande auxdits moyens de réglage (8), via des moyens (14) de réception de données coopérants qui sont montés sur le satellite de retransmission (2).

6. Système selon l'une des revendications 2 à 5,
**caractérisé en ce qu'**il comporte, de plus, un centre de service qui transmet audit centre de contrôle (11) des demandes de clients, relatives au renforcement de la photosynthèse sur au moins une zone (Z) particulière de la Terre (T).

## Claims

1. A method for reinforcing photosynthesis on the Earth (T), said method wherein:
- at least one sunlight retransmitting satellite (2) is placed in orbit around the Earth (T), comprising at least one set of following on-board elements:
● a first optical assembly (3) being intended for collecting sunlight, and the position of which is stationary with respect to the structure (5) of said retransmitting satellite (2);
● a second optical assembly (6) smaller in size and inertia than said first optical assembly (3), being intended for retransmitting the light collected by said first optical assembly (3) with a higher density of the retransmitted flux than the collected flux density, and the orientation of which is able to be modified with respect to the structure (5) of the retransmitting satellite (2) so as to modify the direction of the axis (7) according to which the light is retransmitted;
● remotely controllable means (8), being able of adjusting the orientation of said second optical assembly (6);
● light transmitting means (10) being formed so as to transmit from said first optical assembly (3) to said second optical assembly (6), whatever the orientation of the latter, any light collected by said first optical assembly (3); and
● filtering means for filtering the collected light so that the second optical assembly (6) retransmits the light only in defined frequency bands respectively around 450 nm and 660 nm;
- such a retransmitting satellite (2) is oriented so that said first optical assembly (3) of said retransmitting satellite (2) always remains directed to the sun (S), at least when the retransmitting satellite (2) is travelling above a given region (RE) of said celestial body (T), so as to be able to collect sunlight upon such a travel; and
- the orientation of said second optical assembly (6) of retransmitting satellite (2) is remotely adjusted, so as to retransmit the collected sunlight on a given area (Z) of the Earth (T), upon its travel above such a region (RE), in order to reinforce photosynthesis on this area (Z) of the Earth (T).

2. The system in space for reinforcing photosynthesis on the Earth (T), said system (1) comprising:
- at least one sunlight retransmitting satellite (2), comprising at least one set of following on-board elements:
● a first optical assembly (3) being intended for collecting sunlight, and the position of which is stationary with respect to the structure (5) of said retransmitting satellite (2);
● a second optical assembly (6) smaller in size and inertia than said first optical assembly (3), being intended for retransmitting the light collected by said first optical assembly (3) with a higher density of the retransmitted flux than the collected flux density, and the orientation of which is able to be modified with respect to the structure (5) of the retransmitting satellite (2) so as to modify the direction of the axis (7) according to which the light is retransmitted;
● remotely controllable means (8), being able of adjusting the orientation of said second optical assembly (6);
● light transmitting means (10) being formed so as to transmit from said first optical assembly (3) to said second optical assembly (6), whatever the orientation of the latter, any light collected by said first optical assembly (3); and
● filtering means for filtering the collected light so that the second optical assembly (6) retransmits the light only in defined frequency bands respectively around 450 nm and 660 nm;
said retransmitting satellite (2) being placed in orbit around the Earth (T), while being oriented so that said first optical assembly (3) always remains directed to the sun (S), at least upon its travel above a given region (RE) of the Earth (T), so as to be able to collect sunlight upon such a travel; and
- a control centre (11) of said retransmitting satellite (2), comprising controlling means (12) being capable of adjusting remotely the orientation of said second optical assembly (6) of the retransmitting satellite (2) and being formed so as to adjust such an orientation so that the retransmitting satellite (2) retransmits the collected sunlight on a given area (Z) of the Earth (T), upon its travel above such a region, with the aim at reinforcing photosynthesis on this area (Z) of the Earth (T).

3. The system according to claim 2,
**characterized in that** said filtering means of the retransmitting satellite (2) are achieved from surface treatments and from using appropriate materials for at least one of the following elements : the second optical assembly (6) and the light transmitting means (10).

4. The system according to any of claims 2 to 3,
**characterized in that** said light transmitting means (10) of the retransmitting satellite (2) comprise one of the following means:
- a periscope;
- a set of optical guides; and
- at least one optical fibre .

5. The system according to any of claims 2 to 4,
**characterized in that** said control means (12) of the control centre (11) comprise:
- a calculation unit (15) for determining control orders intended to said means (8) for adjusting the orientation of said second optical assembly (6) of the retransmitting satellite (2); and
- data emitting means (13) being formed so as to transmit said control orders to said adjusting means (8), via cooperating data receiving means (14) being mounted on the retransmitting satellite (2).

6. The system according to any of claims 2 to 5,
**characterized in that** it further comprises a service centre transmitting to said control centre (11) requests from customers, relating to reinforcing photosynthesis on at least one particular area (Z) of the Earth (T).

## Patentansprüche

1. Verfahren zur Verstärkung der Photosynthese auf der Erde (T), wobei:
- in den Orbit um die Erde (T) mindestens ein Satellit (2) zur Weiterübertragung von Sonnenlicht platziert wird, der mindestens einen Satz der folgenden an Bord befindlichen Elemente umfasst:
● eine erste optische Baugruppe (3), die dafür bestimmt ist, Sonnenlicht aufzunehmen, und deren Position bezogen auf die Struktur (5) des Weiterübertragungssatelliten (2) fest ist;
● eine zweite optische Baugruppe (6), die eine Größe und eine Trägheit aufweist, die geringer sind als die der ersten optischen Baugruppe (3), die dafür bestimmt ist, das Licht, das von der ersten optischen Baugruppe (3) aufgenommen wird, mit einer höheren Dichte des ausgesendeten Flusses auszusenden als die Dichte des aufgenommenen Flusses, und deren Ausrichtung bezogen auf die Struktur (5) des Weiterübertragungssatelliten (2) derart verändert werden kann, dass die Richtung der Achse (7) verändert wird, in der das Licht ausgesendet wird;
● fernsteuerbare Mittel (8), die die Ausrichtung der zweiten optischen Baugruppe (6) einstellen können;
● Lichtübertragungsmittel (10), die derart gestaltet sind, sämtliches Licht, das von der ersten optischen Baugruppe (3) aufgenommen wird, von der ersten optischen Baugruppe (3) an die zweite optische Baugruppe (6) unabhängig von der Ausrichtung letzterer zu übertragen; und
● Filtermittel zum Filtern des aufgenommenen Lichts, sodass die zweite optische Baugruppe (6) das Licht lediglich um 450 nm beziehungsweise 660 nm in definierten Frequenzbändern aussendet;
- dieser Weiterübertragungssatellit (2) derart ausgerichtet wird, dass die erste optische Baugruppe (3) des Weiterübertragungssatelliten (2) stets auf die Sonne (S) gerichtet bleibt, zumindest während der Bewegung des Weiterübertragungssatelliten (2) über eine bestimmte Region (RE) des Himmelskörpers (T), um während dieser Bewegung Sonnenlicht aufnehmen zu können; und
- die Ausrichtung der zweiten optischen Baugruppe (6) des Weiterübertragungssatelliten (2) ferneingestellt wird, damit er das aufgenommene Sonnenlicht während seiner Bewegung über diese Region (RE) auf einen bestimmten Bereich (Z) der Erde (T) aussendet, um die Photosynthese in diesem Bereich (Z) der Erde (T) zu verstärken.

2. Weltraumbasiertes System zur Verstärkung der Photosynthese auf der Erde (T), wobei das System (1) Folgendes aufweist:
- mindestens einen Satelliten (2) zur Weiterübertragung von Sonnenlicht, der mindestens einen Satz der folgenden an Bord befindlichen Elemente umfasst:
● eine erste optische Baugruppe (3), die dafür bestimmt ist, Sonnenlicht aufzunehmen, und deren Position bezogen auf die Struktur (5) des Weiterübertragungssatelliten (2) fest ist;
● eine zweite optische Baugruppe (6), die eine Größe und eine Trägheit aufweist, die geringer sind als die der ersten optischen Baugruppe (3), die dafür bestimmt ist, das Licht, das von der ersten optischen Baugruppe (3) aufgenommen wird, mit einer höheren Dichte des ausgesendeten Flusses auszusenden als die Dichte des aufgenommenen Flusses, und deren Ausrichtung bezogen auf die Struktur (5) des Weiterübertragungssatelliten (2) derart verändert werden kann, dass die Richtung der Achse (7) verändert wird, in der das Licht ausgesendet wird;
● fernsteuerbare Mittel (8), die die Ausrichtung der zweiten optischen Baugruppe (6) einstellen können;
● Lichtübertragungsmittel (10), die derart gestaltet sind, sämtliches Licht, das von der ersten optischen Baugruppe (3) aufgenommen wird, von der ersten optischen Baugruppe (3) an die zweite optische Baugruppe (6) unabhängig von der Ausrichtung letzterer zu übertragen; und
● Filtermittel zum Filtern des aufgenommenen Lichts, sodass die zweite optische Baugruppe (6) das Licht lediglich in um 450 nm beziehungsweise 660 nm definierten Frequenzbändern aussendet;
wobei der Weiterübertragungssatellit (2) im Orbit um die Erde (T) platziert und derart ausgerichtet ist, dass die erste optische Baugruppe (3) stets auf die Sonne (S) gerichtet bleibt, zumindest während seiner Bewegung über eine bestimmte Region (RE) der Erde (T), um während dieser Bewegung Sonnenlicht aufnehmen zu können; und
- eine Steuerzentrale (11) des Weiterübertragungssatelliten (2), die Steuermittel (12) aufweist, die in der Lage sind, die Ausrichtung der zweiten optischen Baugruppe (6) des Weiterübertragungssatelliten (2) ferneinzustellen und die derart gestaltet sind, diese Ausrichtung derart einzustellen, dass der Weiterübertragungssatellit (2) das aufgenommene Sonnenlicht während seiner Bewegung über diese Region auf einen bestimmten Bereich (Z) der Erde (T) aussendet, um die Photosynthese in diesem Bereich (Z) der Erde (T) zu verstärken.

3. System nach Anspruch 2,
**dadurch gekennzeichnet, dass** die Filtermittel des Weiterübertragungssatelliten (2) mittels Oberflächenbehandlungen und der Verwendung geeigneter Materialien für mindestens eins der folgenden Elemente erhalten werden: die zweite optische Baugruppe (6) und die Lichtübertragungsmittel (10).

4. System nach einem der Ansprüche 2 und 3,
**dadurch gekennzeichnet, dass** die Lichtübertragungsmittel (10) des Weiterübertragungssatelliten (2) eins der folgenden Mittel aufweisen:
- ein Periskop;
- einen Satz von Lichtleitern; und
- mindestens einen Lichtwellenleiter.

5. System nach einem der Ansprüche 2 bis 4,
**dadurch gekennzeichnet, dass** die Steuermittel (12) der Steuerzentrale (11) Folgendes aufweisen:
- eine Recheneinheit (15), um Steuerbefehle zu bestimmen, die für die Mittel (8) zum Einstellen der Ausrichtung der zweiten optischen Baugruppe (6) des Weiterübertragungssatelliten (2) bestimmt sind; und
- Mittel (13) zum Senden von Daten, die derart gestaltet sind, dass sie die Steuerbefehle an die Einstellmittel (8) über mitwirkende Datenempfangsmittel (14) übertragen, die an dem Weiterübertragungssatelliten (2) montiert sind.

6. System nach einem der Ansprüche 2 bis 5,
**dadurch gekennzeichnet, dass** es ferner eine Servicezentrale aufweist, die an die Steuerzentrale (11) Anfragen von Kunden bezogen auf die Verstärkung der Photosynthese in mindestens einem bestimmten Bereich (Z) der Erde (T) überträgt.
